(19) Europäisches Patentamt
European Patent Office
Office européen des brevets

(11) **EP 2 827 526 A2**

(12) **EUROPÄISCHE PATENTANMELDUNG**

(43) Veröffentlichungstag:
**21.01.2015  Patentblatt 2015/04**

(51) Int Cl.:
***H04L 9/00*** (2006.01)

(21) Anmeldenummer: **14176954.7**

(22) Anmeldetag: **14.07.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **18.07.2013   DE 102013214098**

(71) Anmelder: **Siemens Aktiengesellschaft
80333 München (DE)**

(72) Erfinder:
• **Bußer, Jens-Uwe
85579 Neubiberg (DE)**
• **Waidelich, Fabienne
80337 München (DE)**

(54) **Verfahren und System zur Aggregation von Messwerten**

(57)    Das erfindungsgemäße System und Verfahren zur Aggregation von Messwerten mehrerer intelligenter Messeinrichtungen (11.1, 11.2,..,11.N) zur Steuerung eines Verteilnetzes verwendet ein partiell homomorphes, additives Verschlüsselungsverfahren, bei dem der verschlüsselte Wert einer Summe von Messwerten gleich dem Produkt der einzelnen verschlüsselten Messwerte ist und weist als ersten Verfahrensschritt ein Verschlüsseln (21.1,..,21.N) des in einer Messeinrichtung (11.1, 11.2,..,11.N) ermittelten Messwerts mit einem öffentlichen Schlüssel (P) einer Auswertestelle (13) in jeder Messeinrichtung (11.1, 11.2,..,11.N) und das Senden des verschlüsselten Messwerts von jeder Messeinrichtung (11.1, 11.2,..,11.N) an einen Datenkonzentrator (12) auf. Im zweiten Verfahrensschritt wird im Datenkonzentrator (12) eine Multiplikation (16) der empfangenen, verschlüsselten Messwerte durchgeführt und das Produkt der verschlüsselten Messwerte an die Auswertestelle (13) gesendet. In der Auswertestelle (13) wird das Produkt der verschlüsselten Messwerte mit einem geheimen Schlüssel (S) der Auswertestelle (13) entschlüsselt und die Summe der Messwerte ermittelt.

FIG 2

**Beschreibung**

Die Erfindung betrifft ein Verfahren und ein System zur Aggregation von Messwerten mehrerer intelligenter Messeinrichtungen zur Steuerung eines Verteilernetzes.

Traditionelle Messeinrichtungen zur Erfassung des fluktuierenden Verbrauchs eines Gutes, beispielsweise elektromechanische Stromzähler, Wasser- oder Gaszähler, zeigen nur den kumulierten Verbrauchswert des Gutes an. Bei einem elektromechanischen Stromzähler wird beispielsweise die kumulierte Gesamtenergie mittels eines Rollenzählwerks angezeigt, welches manuell abgelesen werden muss. Zur Ermittlung des Verbrauchs, beispielsweise innerhalb eines Jahres, muss der im vorherigen Jahr abgelesene Wert von dem aktuell abgelesenen Wert abgezogen werden. Diese Daten werden lediglich zu Abrechnungszwecken genutzt. Eine Nutzung zur Überwachung und Steuerung von Verteilnetzen ist damit nicht möglich.

Moderne intelligente Messeinrichtungen, die mehr Intelligenz und Kommunikationsfähigkeiten umfassen, beispielsweise elektronische Zähler, können aber auch zur Steuerung eines Verteilnetzes eingesetzt werden. Dazu ermittelt eine solche intelligente Messeinrichtung beispielsweise einen Verbrauchswert, der über eine viel kürzere Zeitspanne, beispielsweise wenige Stunden, wenige Minuten oder wenige Sekunden, kumuliert wurde und sendet diesen kumulierten Messwert an einen Datenkonzentrator, der sich beispielsweise in der nächstgelegenen Ortsnetzstation befindet. Auch andere lokale Parameter wie elektrische Spannung, Stromstärke, usw. können von den intelligenten Messeinrichtungen dezentral erfasst und an den Datenkonzentrator gesendet werden. Dort werden die Messwerte vieler intelligenter Messeinrichtungen gesammelt und beispielsweise über eine Mobilfunkverbindung, eine Standleitung beispielsweise in Form eines Lichtwellenleiters oder einer Mikrowellenverbindung, an eine zentrale Auswertestelle des Messstellenbetreibers weitergeleitet.

In einer Vielzahl von Ländern dürfen solche in kurzen Zeitabständen ermittelten Messwerte einer einzelnen Messeinrichtung aus Gründen des Schutzes personenbezogener Daten nur aggregiert, das heißt mit den Messwerten einer Vielzahl von anderen Verbrauchern bzw. Messeinrichtungen zusammen weitergeleitet werden, um die Erstellung eines Nutzungsprofils für einen einzelnen Verbraucher zu verhindern.

Um die Übertragung der einzelnen Messwerte eines Verbrauchers zu sichern, werden diese üblicherweise verschlüsselt, beispielsweise mit einem Transportschichtsicherheitsprotokoll TLS oder Internet Protokoll Sicherheitsprotokoll IPsec, an den Datenkonzentrator und von dort zur Auswertestelle des Messstellenbetreibers übertragen. Dem Messstellenbetreiber oder auch einem Angreifer mit Zugang zum Datenkonzentrator, beispielsweise direkt physikalisch oder auch per Fernzugriff, wäre es aber prinzipiell möglich, auf die Messdaten einzelner Messeinrichtungen zuzugreifen und damit Profile einzelner Verbraucher zu erhalten.

In dem Artikel Flavio D. Garcia und Bart Jacobs, Privacy-friendly Energy-metering via Homomorphic Encryption, in 6th Workshop on Security and Trust Management (STM 2010), Lecture Notes in Computer Science, Band 6710, Seiten 226-238, 2011, wird ein kryptographisches Verfahren vorgeschlagen, in dem Messdaten, beispielsweise Verbrauchsdaten, mehrerer Verbraucher in einer Ortsnetzstation zu einem Gesamtverbrauch aggregiert werden, ohne dass Messdaten einzelner Verbraucher bekannt werden können. Als Verschlüsselungsverfahren wird dabei ein partiell homomorphes, additives Verschlüsselungsverfahren verwendet, bei dem das Produkt von verschlüsselten Werten gleich der verschlüsselten Summe der Werte ist.

Dazu ist jeder Messeinrichtung ein öffentlicher und ein geheimer Schlüssel zugewiesen. Zusätzlich kennt jede Messeinrichtung jeweils den öffentlichen Schlüssel aller anderen Messeinrichtungen, die mit einem Datenkonzentrator verbunden sind. Jeder in der Messeinrichtung ermittelte Messwert wird zufällig unterteilt in eine Anzahl von Teilwerten, die der Anzahl aller Messeinrichtungen entspricht. Anschließend verschlüsselt die Messeinrichtung jeden Teilwert außer einem mit dem öffentlichen Schlüssel je einer anderen Messeinrichtung mit dem partiell homomorphen, additiven Verschlüsselungsverfahren und sendet alle verschlüsselten Teilwerte an den Datenkonzentrator. Den einen nicht verschlüsselten Teilwert behält die Messeinrichtung für sich. Der Datenkonzentrator multipliziert die von allen Messeinrichtungen für je eine bestimmte Messeinrichtung erhaltenen verschlüsselten Teilwerte und sendet diesen Wert an diese Messeinrichtung. Die Messeinrichtung entschlüsselt mit ihrem geheimen Schlüssel den von dem Datenkonzentrator für sie verschlüsselten Wert, der der Summe von je einem Teilwert von allen anderen Messeinrichtungen entspricht, addiert den noch nicht übertragenen Teilwert und schickt diese Summe an den Datenkonzentrator zurück. Der Datenkonzentrator sammelt die Werte aller Messeinrichtungen, aggregiert diese und sendet den aggregierten Messwert an eine Auswertestelle.

Dieses Verfahren ist ein no-leakage-Protokoll, das heisst es lässt bereits im Datenkonzentrator keinen Rückschluss auf die Messwerte eines einzelnen Verbrauchers zu. Dieses Verfahren hat aber auch den Nachteil, dass für jede Messeinrichtung zusätzlich zu den üblichen kryptographischen Parametern, wie Schlüsselmaterial beispielsweise für eine TLS-Verbindung, ein Schlüsselpaar mit öffentlichem als auch geheimem Schlüssel, für das partiell homomorphe Verschlüsselungsverfahren erzeugt werden muss; zusätzlich muss der öffentlichen Schlüssel jeder Messeinrichtung an alle anderen Messeinrichtungen sicher verteilt werden. Die Messeinrichtung sowie der Datenkonzentrator müssen pro Messvorgang eine Vielzahl von Verschlüsselungen beziehungsweise Multiplikationen durchführen, und es müssen mehrere Nachrichten zwischen Datenkonzentrator und jeder Messeinrichtung pro Messvorgang ausgetauscht werden, sodass sowohl die Messeinrichtung als auch der Datenkonzentrator eine hohe Rechenleistung bereitstellen müssen und somit kostenaufwändig sind. Zusätzlich muss die Verbindungsleitung eine beträchtliche Datenkapazität übertragen können.

Es ist somit die Aufgabe der vorliegenden Erfindung, ein Verfahren zur sicheren und kostengünstigen Aggregation von Messwerten einer Messeinrichtung zu schaffen, die nicht die vorgenannten Nachteile aufweist.

Die Aufgabe wird durch die in den unabhängigen Ansprüchen beschriebenen Maßnahmen gelöst. In den Unteransprüchen sind vorteilhafte Weiterbildungen der Erfindung dargestellt.

Das erfindungsgemäße Verfahren zur Aggregation von Messwerten mehrerer intelligenter Messeinrichtungen zur Steuerung eines Verteilnetzes verwendet ein partiell homomorphes, additives Verschlüsselungsverfahren, bei dem der verschlüsselte Wert einer Summe von Messwerten gleich dem Produkt der einzelnen verschlüsselten Messwerte ist und weist als ersten Verfahrensschritt ein Verschlüsseln des in einer Messeinrichtung ermittelten Messwerts mit einem öffentlichen Schlüssel einer Auswertestelle in jeder Messeinrichtung und das Senden des verschlüsselten Messwerts von jeder Messeinrichtung an einen Datenkonzentrator auf. Im zweiten Verfahrensschritt wird im Datenkonzentrator eine Multiplikation der empfangenen, verschlüsselten Messwerte durchgeführt und das Produkt der verschlüsselten Messwerte an die Auswertestelle gesendet. In der Auswertestelle wird das Produkt der verschlüsselten Messwerte mit einem geheimen Schlüssel der Auswertestelle entschlüsselt und somit die Summe der Messwerte ermittelt.

Somit muss jeder Messeinrichtung lediglich der öffentlichen Schlüssel der Auswertestelle bekannt gemacht werden bzw. bekannt sein. Es sind pro Messwert in jeder Messeinrichtung lediglich eine Verschlüsselung statt N-1 Verschlüsselungen im oben beschriebenen Stand der Technik durchzuführen. Ebenso reduziert sich der Rechenaufwand für Multiplikationen im Datenkonzentrator erheblich von Ordnung $N^2$ auf Ordnung N. Bei einer typischen Anzahl von 100 Messeinrichtungen, die ihre Messwerte an einen Datenkonzentrator senden, reduziert sich die Anzahl der Multiplikationen um den Faktor 100. Vorteilhaft ist weiterhin, dass keinerlei vertrauliches Schlüsselmaterial für das partiell homomorphe Verschlüsselungsverfahren in den Messeinrichtungen und im Datenkonzentrator gespeichert werden muss, sondern lediglich vertrauliches Schlüsselmaterial für TLS oder IPSec.

In einer Ausführungsform wird das Produkt lediglich über die Messwerte einer oder mehrerer Teilmengen von Messeinrichtungen, die mit einem Datenkonzentrator verbunden sind, gebildet. Somit können detaillierte Messwerte einzelner Teilbereiche des Verteilnetzes ermittelt und ausgewertet werden.

In einer vorteilhaften Ausführungsform werden bei Bedarf eine oder mehreren Teilmengen neu eingerichtet, geändert oder gelöscht. Dies ermöglicht es, die Messwerte auch in einem sich verändernden Verteilnetz ermitteln zu können und die Ermittlung der Messwerte an das geänderte Netz anpassen zu können.

In einer vorteilhaften Ausführungsform des erfindungsgemäßen Verfahrens sind jeweils zwei Teilmengen von Messeinrichtungen so konfiguriert, dass sich diese um mehr als eine Messeinrichtung oder um eine vorgegebene Anzahl von Messeinrichtungen unterscheiden. Dies stellt sicher, dass durch eine einfache Subtraktion von Messwerten von Teilmengen kein Rückschluss auf eine einzelne Messeinrichtung und damit auf einen einzelnen Verbraucher möglich ist.

In einer vorteilhaften Ausführungsform beträgt die Gesamtanzahl und/oder Anzahl von Messeinrichtungen einer Teilmenge mindestens etwa 8 Messeinrichtungen. Bei einer Aggregation von dieser Anzahl von Messeinrichtungen ist sichergestellt, dass nicht mehr auf eine einzelne Messeinrichtung durch die Analyse der aggregierten Messwerte zurückgeschlossen werden kann.

In einer vorteilhaften Ausführungsform teilt der Datenkonzentrator die Anzahl der multiplizierten Messwerte an die Auswertestelle mit. Dies ermöglicht auch die Ermittlung von Parametern, die nicht additiv sind, beispielsweise Mittelwerte von lokal gemessener Spannung oder Phase im elektrischen Verteilnetz, oder Wassertemperatur bei der Wasserversorgung. Durch die in der Auswertestelle bekannte Anzahl von Messwerten kann die erhaltene Summe geteilt und somit der Mittelwert eines nicht additiven Parameters ermittelt werden.

In einer weiteren vorteilhaften Ausführungsform der vorliegenden Erfindung wird in jeder Messeinrichtung der Messwert erst quadriert und dann verschlüsselt. Dies ermöglicht es, auch Schwankungen, Messfehler oder Messungenauigkeiten in der Auswertestelle zu ermitteln.

In einer Ausführungsform wird für jeden fehlenden Messwert von der Messeinrichtung ein Ersatzwert $\neq 0$ oder eine Fehlermeldung an den Datenkonzentrator gesendet. Dies ermöglicht eine korrekte Ermittlung eines nicht additiven Messwerts in der Auswertestelle, auch wenn eine Messeinrichtung keinen Messwert an den Datenkonzentrator sendet.

In einer vorteilhaften Ausführungsform des erfindungsgemäßen Verfahrens wird für jeden als fehlerhaft markierten oder fehlenden Messwert, der zu einem Zeitpunkt T ermittelt und von dem Datenkonzentrator empfangen wurde, der Messwert bei der Bildung des Produkts zum Zeitpunkt T im Datenkonzentrator verwendet, der zum letzten vorherigen Zeitpunkt T-1 ermittelt wurde. Dies ermöglicht eine gute Approximation der aggregierten Messwerte, insbesondere wenn Messwerte sehr häufig beispielsweise im Sekundentakt ermittelt werden oder der Verbrauch zeitlich nicht extrem variiert.

Ein erfindungsgemäßes System zur Aggregation von Messwerten mehrerer intelligenter Messeinrichtungen zur Steuerung eines Verteilnetzes umfasst mehrere intelligente Messeinrichtungen, einen Datenkonzentrator und eine Auswertestelle, wobei jeder Messeinrichtung ein öffentlicher Schlüssel der Auswertestelle bekannt ist, und jede Messeinrichtung ausgebildet ist, um einen ermittelten Messwert mit diesem öffentlichen Schlüssel zu verschlüsseln und den verschlüsselten Messwert an den Datenkonzentrator zu senden. Der Datenkonzentrator ist eingerichtet, um die empfangenen, verschlüsselten Messwerte zu multiplizieren und das resultierende Produkt der verschlüsselten Messwerte an die Auswertestelle zu senden. Der Auswertestelle ist ein geheimer Schlüssel zugeordnet und die Auswertestelle ist eingerichtet, um das Produkt der verschlüsselten Messwerte mit einem geheimen Schlüssel der Auswertestelle zu entschlüsseln und somit die Summe der Messwerte zu ermitteln.

Dies hat den Vorteil, dass in der Messeinrichtung lediglich ein öffentlicher Schlüssel der Auswertestelle, nicht aber ein geheimer Schlüssel vorhanden sein muss. Daher sind keine aufwendigen Vorkehrungen zur sicheren Aufbewahrung eines geheimen Schlüssels notwendig. Des Weiteren liegen am Datenkonzentrator keine Messdaten in unverschlüsselter Form vor, sodass ein Datenkonzentrator, der oft beispielsweise in einer Ortsnetzstation einfach zugänglich ist, kein Sicherheitsrisiko bildet. Von Vorteil ist ebenfalls, dass in der Auswerteeinheit lediglich der Gesamtwert, aber nicht ein einzelner Messwert einer Messeinrichtung vorliegt. Somit ist eine datenschutzkonforme Abfrage von Messeinrichtungen beispielsweise auch im Sekundentakt möglich.

Ein erfindungsgemäßes Computerprogramm mit Programmbefehlen zur Durchführung des vorgenannten Verfahrens sowie ein Datenträger der das Computerprogramm speichert, wird beansprucht. Durch die Ausführung des Computerprogramms in den intelligenten Messeinrichtungen, dem Datenkonzentrator und der Auswertestelle werden diese zur Durchführung des Verfahrens befähigt.

Ausführungsbeispiele des erfindungsgemäßen Verfahrens sowie des erfindungsgemäßen Systems sind in den Zeichnungen beispielhaft dargestellt und werden anhand der nachfolgenden Beschreibung näher erläutert. Es zeigen:

Fig. 1    ein Ausführungsbeispiel des erfindungsgemäßen Verfahrens als Ablaufdiagramm;

Fig. 2    ein Ausführungsbeispiel eines erfindungsgemäßen Systems in schematischer Darstellung; und

Fig. 3    ein beispielhaftes Verteilnetz mit Teilmengen von Messeinrichtungen, die mit einem Datenkonzentrator verbunden sind in schematischer Darstellung.

Einander entsprechende Teile sind in allen Figuren mit den gleichen Bezugszeichen versehen.

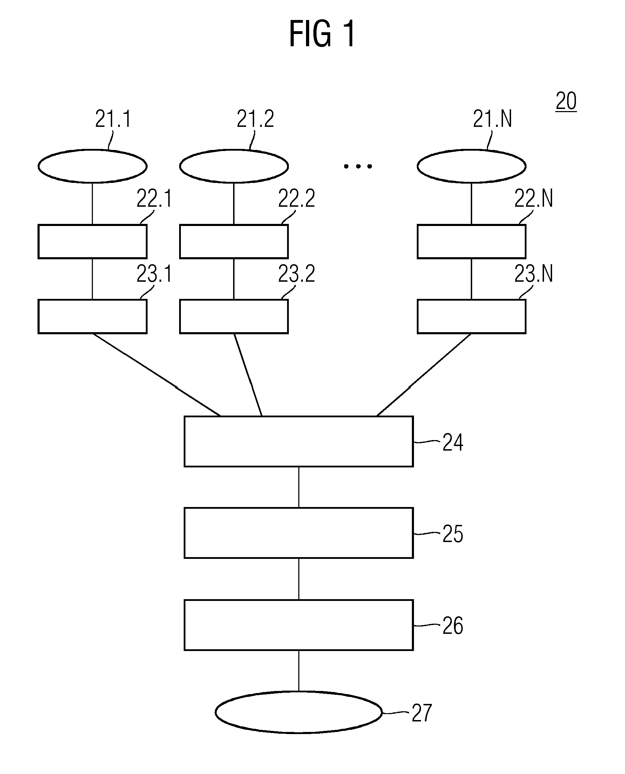

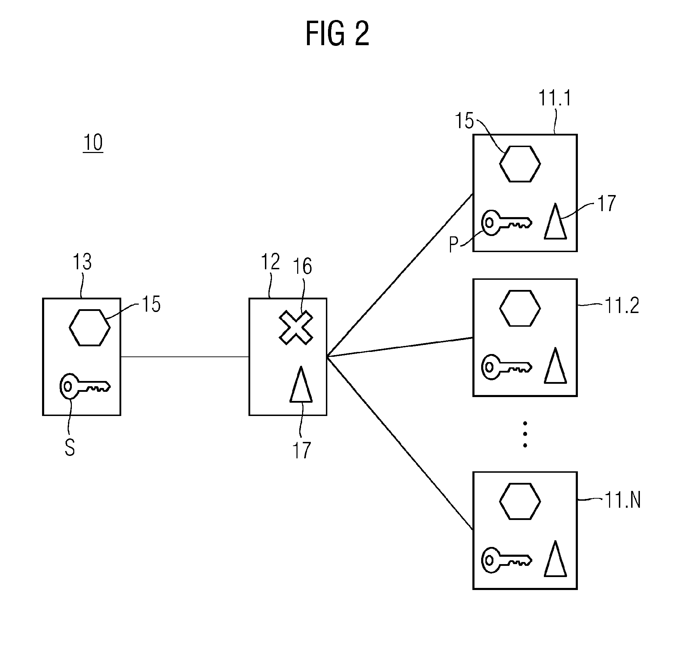

In Figur 1 ist nun anhand eines Ablaufdiagramms 20 die Aggregation von Messwerten mehrerer intelligenter Messeinrichtungen zur Steuerung eines Verteilnetzes dargestellt. Ein beispielhaftes Verteilnetz bzw. System ist in Figur 2 dargestellt. Dabei kann es sich um ein Verteilnetz für beispielsweise Strom, Wasser, Gas oder Ähnlichem handeln. Als Ausgangspunkt des Verfahrens wird in 21.1 bis 21.N jeweils ein Messwert $m_i$ von jedem der N intelligenten Messeinrichtungen ermittelt. Im Verfahrensschritt 22.1 bis 22.N wird jeweils von der Messeinrichtung i der Messwert $m_i$ mittels eines partiell homomorphen Verschlüsselungsverfahrens und einem in jeder Messeinrichtung verfügbaren öffentlichen Schlüssel einer Leitstelle verschlüsselt. Das partielle homomorphe Verschlüsselungsverfahren hat dabei die Eigenschaft, dass verschlüsselte Zahlen addiert werden können gemäß

$$\{m_1\}_P * \{m_2\}_P = \{m_1 + m_2\}_P, \qquad\qquad (1)$$

wobei $\{m_1\}_P$ den mit einem öffentlichen homomorphen Schlüssel P der Auswertestelle verschlüsselten Messwert $m_1$ einer Messeinrichtung 11.1, siehe Figur 2, darstellt. Eine vollständig homomorphe Verschlüsselung, die Addition und Multiplikation unterstützt, ist hier nicht notwendig.

Die Messeinrichtungen 11.1, 11.i,..,11.N verschlüsseln ihre Messwerte $m_i$ gemäß

$$m_i \rightarrow \{m_i\}_P \qquad\qquad (2)$$

und senden im Verfahrensschritt 23.1, 23.N jeweils den verschlüsselten Messwert $\{m_i\}_P$ an einen Datenkonzentrator 12.

Dieser addiert die erhaltenen Messwerte $m_i$ der intelligenten Messeinrichtungen 11.1, 11.2,..,11.N durch Multiplikation der erhaltenen verschlüsselten Werte zu

$$\{M\}_P = \Pi \{m_i\}_P, \qquad\qquad (3)$$

wobei

$$M = \sum m_i \qquad\qquad (4)$$

in Verfahrensschritt 24. Nur dieses Ergebnis $\{M\}_P$ leitet der Datenkonzentrator an die Auswertestelle 13 weiter, siehe Verfahrensschritt 25.

Der Auswertestelle 13 ist ein geheimer, homomorpher Schlüssel S zugeordnet, mit dem die mit dem öffentlichen Schlüssel P verschlüsselten Messwerte gemäß

$$\{\{M\}_P\}_S = M \qquad\qquad (5)$$

entschlüsselt werden, siehe Verfahrensschritt 26. Der entschlüsselte Wert M stellt die Summe (4) der in den einzelnen Messeinrichtungen ermittelten einzelnen Messwerte, die den Verbrauchswerten entsprechen, dar. Diese Summe kann im Verfahrensschritt 27 weiter ausgewertet und beispielsweise zur Verteilnetzsteuerung verwendet werden.

Figur 2 zeigt nun beispielshaft ein System aus intelligenten Messeinrichtungen 11.1, 11.2, ... 11.N, die über beispielsweise eine Funkverbindung gemäß einem öffentlichen Mobilfunknetz oder einer Mikrowellenverbindung oder aber über eine Festverbindung, beispielsweise in Form einer Drahtader oder eines Lichtwellenleiters, mit einem Datenkonzentrator 12 verbunden sind. Der Datenkonzentrator 12 ist wiederum mit einer Auswertestelle 13 verbunden.

In jeder intelligenten Messeinrichtung 11.1, 11.2, ... 11.N, ist ein partiell homomorphes Verschlüsselungsverfahren 15, insbesondere ein additives Verschlüsselungsverfahren, sowie ein öffentlicher Schlüssel P der Auswertestelle 13 verfügbar. Beispielsweise kann bei Einrichtung des Netzes oder bei der Hinzufügung einer neuen Messeinrichtung der öffentliche Schlüssel P der Messeinrichtung zugewiesen werden. Zusätzlich kann zur Authentisierung einer Messeinrichtung 11.1, 11.2, ... 11.N gegenüber dem Datenkonzentrator 12 ein Authentisierungs-Berechtigungsnachweis 17 sowohl in der Messeinrichtung 11.1, 11.2, ... 11.N als auch im Datenkonzentrator 12 vorliegen.

Der Datenkonzentrator 12 umfasst des Weiteren eine Funktion zur Multiplikation 16 der empfangenen, verschlüsselten Messwerte mi. Ein öffentlicher oder geheimer Schlüssel zur partiell homomorphen Ver- oder Entschlüsselung der Messwerte ist im Datenkonzentrator 12 nicht vorhanden. Der Datenkonzentrator multipliziert lediglich die erhaltenen verschlüsselten Messwerte und übermittelt das Produkt an die Auswertestelle 13. Diese umfasst wiederum das additive homomorphe Verschlüsselungsverfahren 15, das auch in den Messeinrichtungen 11.1, 11.2, ... 11.N verwendet wird, sowie einen geheimen Schlüssel S.

Für einen Integritätsschutz und Vertraulichkeit gegenüber Dritten sollten die übertragenen Nachrichten, die neben den partiell homomorph verschlüsselten Messwerten noch andere Daten wie Identifikationsnummer der Messeinrichtung 11.1, 11.2, ... 11.N, Zeitstempel, etc. enthalten, zusätzlich mit Sicherheitsprotokollen wie beispielsweise TLS oder IPsec entsprechend geschützt werden, vor allem wenn sie über unsichere öffentliche Netzwerke übertragen werden.

Sollten bestimmte Werte verschiedener, intelligenter Messeinrichtungen 11.1, 11.2, ... 11.N im Datenkonzentrator 12 nicht addiert, sondern multipliziert werden, so können für diese entsprechend andere partiell homomorphe Verschlüsselungen verwendet werden.

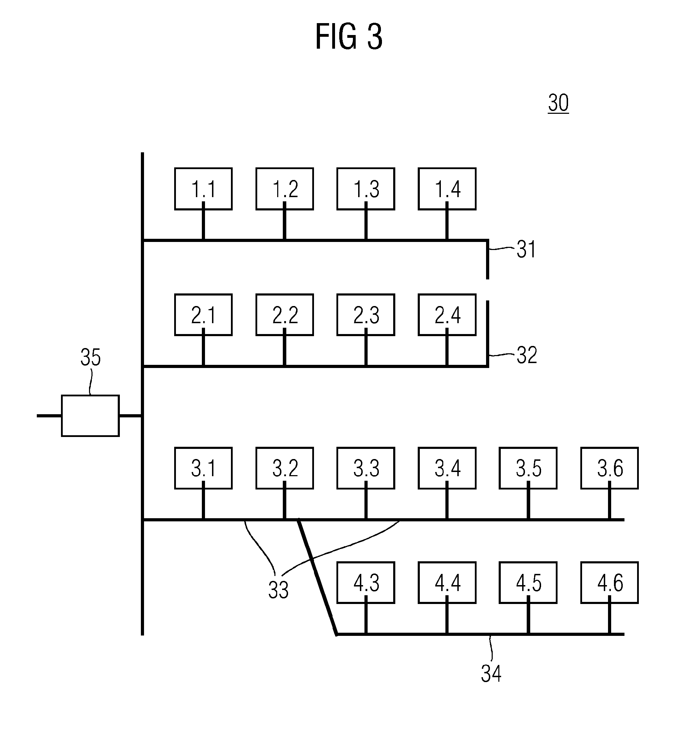

Messwerte der Messeinrichtungen 11.1, 11.2, ... 11.N können im Datenkonzentrator 12 in verschiedener Weise aggregiert werden. Figur 3 zeigt dazu ein beispielhaftes Verteilnetz mit Verbrauchern, die jeweils durch eine Messeinrichtung 1.1, ... 1.4, 2.1, ..., 2.4, 3.1, ..., 3.6 und 4.3, ..., 4.6 repräsentiert werden. Die dargestellten Messeinrichtungen 1.1, ..., 4.6, befinden sich dabei im Einzugsbereich eines Datenkonzentrators 35, der die aggregierten Messwerte der einzelnen Messeinrichtungen 1.1, ..., 4.6 erzeugt. Im Datenkonzentrator 35 kann nun eine vollständige Summe der Messwerte aller Messeinrichtungen 1.1, ..., 4.6 im Einzugsbereich des Datenkonzentrators 35 gebildet werden. Es können aber auch Teilsummen von einer oder mehreren Teilmengen von Messeinrichtungen 1.1, ..., 4.6, beispielsweise in Form von Strängen 31, 32, 33, 34 gebildet werden. So kann im Datenkonzentrator 35 beispielsweise für den Strang 31 ein aggregierter Messwert der Messeinrichtungen 1.1, 1.2, 1.3, 1.4, für den Strang 32 ein aggregierter Messwert der Messeinrichtungen 2.1, 2.2, 2.3, 2.4, für den Strang 33 ein aggregierter Messwert der Messeinrichtungen 3.1, 3.2, 3.3, 3.4, 3.5, 3.6 und für den Strang 34 ein aggregierter Messwert der Messeinrichtungen 4.3, 4.4, 4.5, 4.6 im Datenkonzentrator 35 ermittelt und zur Auswertestelle, nicht abgebildet, zur weiteren Auswertung übermittelt werden.

Es können auch Teilsummen der Messwerte von bestimmten intelligenten Messeinrichtungen, beispielsweise von Messeinrichtung 1.1, 2.1, 3.1, die nahe an dem Datenkonzentrator liegen, und eine weitere Teilsumme von Messwerten von Messeinrichtungen 1.4, 2.4, 3.6, 4.6, die eher am Ende eines Strangs liegen, gebildet werden, um Spannungsüberhöhungen bei starker regenerativer Einspeisung am Strangende festzustellen. Weitere Teilmengen von Messeinrichtungen können nach Bedarf, zum Beispiel beim Verteilnetzausbau beziehungsweise Verteilnetzumbau definiert werden.

Bei Bedarf können Teilmengen, für die einzelne Summen gebildet werden, gelöscht oder auch neu hinzugefügt werden. Dabei ist darauf zu achten, dass eine Teilmenge von Messeinrichtungen 1.1, ..., 4.6 nicht weniger als etwa 8 Messeinrichtungen umfasst, um eine Ermittlung von Verbrauchsprofilen einzelner Verbraucher zu verhindern. In gleicher Weise ist darauf zu achten, dass Teilmengen von Messeinrichtungen 1.1, ..., 4.6, die beispielsweise bei der Auswertung in der Auswertestelle 13 voneinander subtrahiert werden können, sich um mindestens einen beziehungsweise eine vorgegebene Anzahl, beispielsweise 8, Messeinrichungen 1.1, ..., 4.6 unterscheidet. Es ist also immer darauf zu achten, die Messwerte von ausreichend vielen Messeinrichtungen 1.1, ..., 4.6 zusammenzufassen, um zuverlässig sicherzustellen, dass keine Analyse einzelner Verbraucher möglich sind, insbesondere dass sich keine Kombination an Teilmengen beziehungsweise daraus resultierenden Teilsummen von Messwerten Rückschlüsse auf einzelne Haushalte zulassen.

Neben additiven Parametern, wie zum Beispiel die elektrische Leistung, Wirk- und/oder Blindleistung, Gas- oder Wassermengen, die Einspeisung elektrischer Leistung oder elektrischer Energie in Leitungen können auch nicht additive Parameter über das beschriebene Verfahren in der Auswertestelle ermittelt werden. Solche nicht additiven Parameter sind beispielsweise die lokale Spannung und Phase im elektrischen Verteilnetz, oder aber der Temperatur von Wasser bei der Wasserversorgung. Dazu ermittelt der Datenkonzentrator 12, 35 neben dem Produkt der einzelnen verschlüsselten Messwerte auch die Anzahl der multiplizierten Messwerte und gibt diese Anzahl an die Auswertestelle 13 weiter. Fehlen Messwerte einzelner Messeinrichtungen, so ist die angegebene Anzahl entsprechend zu reduzieren. Bei fehlenden Messwerten nicht additiver Parameter dürfen die Messeinrichtungen keine verschlüsselten Messwerte der Größe Null senden. Stattdessen müssen sie dem Datenkonzentrator 12, 35 eine entsprechende Fehlermeldung oder überhaupt keinen Messwert senden. Eine Messeinrichtung kann stattdessen einen Ersatzwert, beispielsweise den zu einem vorherigen Zeitpunkt T-1 ermittelten Messwert an den Datenkonzentrator 12, 35 senden.

Erhält der Datenkonzentrator 12, 35 von einer Messeinrichtung zum Zeitpunkt T keinen verschlüsselten Messwert $\{m_{i,T}\}_P$, so kann er unter der Annahme einer geringen Änderung näherungsweise auch den Messwert $\{m_{i,T-1}\}_P$ vom vorherigen Zeitpunkt T-1 einrechnen. Diese Annahme ist insbesondere dann gerechtfertigt, wenn die Daten sehr oft abgefragt werden, beispielsweise im Sekundentakt, und nur wenige Messwerte einzelner Messeinrichtungen fehlen.

Es können ebenfalls Schwankungen, Messfehler oder Messungenauigkeiten $\Delta m_i$, die üblicherweise quadratisch zu einem Gesamtwert $\Delta M$ gemäß

$$(\Delta M)^2 = \sum (\Delta m_i)^2 \qquad (6)$$

addiert werden, der Auswertestelle 13 zur Verfügung gestellt werden. Dazu quadriert jede Messeinrichtung die ermittelte Messungenauigkeit $\Delta m_i$ zuerst und verschlüsselt diesen quadrierten Messwert mit dem öffentlichen Schlüssel gemäß dem additiven Verschlüsselungsverfahren und sendet diesen an den Datenkonzentrator 12, 35. Im Datenkonzentrator 12, 35 werden die quadrierten Werte durch Multiplikation addiert und das Ergebnis an die Leitstelle 13 gesandt. Nach einer Entschlüsselung des empfangen Ergebnisses und einem Ziehen der Quadratwurzel erhält man somit den Gesamtwert $\Delta M$. Unter Verwendung der Anzahl an Schwankungswerten kann somit auch eine Schätzfunktion für die Standardabweichung und weitere statistische Werte ermittelt werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

**Patentansprüche**

**1.** Verfahren zur Aggregation von Messwerten mehrerer intelligenter Messeinrichtungen (11.1, 11.2,..,11.N) zur Steuerung eines Verteilnetzes mit einem partiell homomorphen, additiven Verschlüsselungsverfahren, bei dem der verschlüsselte Wert einer Summe von Messwerten gleich dem Produkt der einzelnen verschlüsselten Messwerte ist, mit den Verfahrensschritten:

- Verschlüsseln (21.1,..,21.N) des in einer Messeinrichtung (11.1, 11.2,..,11.N) ermittelten Messwertes mit einem öffentlichen Schlüssel (P) einer Auswertestelle (13) in jeder Messeinrichtung (11.1, 11.2,..,11.N), und Senden (22.1,..,22.N) des verschlüsselten Messwertes von jeder Messeinrichtung (11.1, 11.2,..,11.N) an einen Datenkonzentrator (12);
- Multiplikation (24) der empfangenen, verschlüsselten Messwerte im Datenkonzentrator (12) und Senden (25) des Produkts der verschlüsselten Messwerte an die Auswertestelle (13),
- Entschlüsseln (26) des Produkts der verschlüsselten Messwerte mit einem geheimen Schlüssel (S) der Auswertestelle (13) und somit Ermittlung der Summe der Messwerten.

2. Verfahren nach Anspruch 1, wobei das Produkt lediglich über die Messwerte einer oder mehrerer Teilmengen von Messeinrichtungen (11.1, 11.2,.., 11.N), die mit einem Datenkonzentrator (12) verbunden sind, gebildet wird.

3. Verfahren nach Anspruch 2, wobei bei Bedarf eine oder mehrere Teilmengen neu eingerichtet, geändert oder gelöscht werden.

4. Verfahren nach Anspruch 2 oder 3, wobei sich jeweils zwei Teilmengen von Messeinrichtungen (11.1, 11.2,..,11.N) um mehr als eine Messeinrichtung (11.1, 11.2,..,11.N) oder um eine vorgegebene Anzahl von Messeinrichtungen (11.1, 11.2,..,11.N) unterscheiden.

5. Verfahren nach einem der Ansprüche 2 bis 4, wobei eine Gesamtanzahl und/oder eine Anzahl von Messeinrichtungen (11.1, 11.2,..,11.N) einer Teilmenge mindestens acht Messeinrichtungen (11.1, 11.2,..,11.N) beträgt.

6. Verfahren nach einem der Ansprüche 1 bis 5, wobei der Datenkonzentrator (12) die Anzahl der multiplizierten Messwerte an die Auswertestelle (13) mitteilt.

7. Verfahren nach einem der Ansprüche 1 bis 6, wobei jede Messeinrichtung (11.1, 11.2,..,11.N) den Messwert erst quadriert und dann verschlüsselt.

8. Verfahren nach einem der Ansprüche 6 oder 7, wobei für jeden fehlenden Messwert von der Messeinrichtung (11.1, 11.2,..,11.N) ein Ersatzwert ungleich Null oder eine Fehlermeldung an den Datenkonzentrator (12) gesendet wird.

9. Verfahren nach einem der Ansprüche 1 bis 7, wobei für jeden als fehlerhaft erkannten oder fehlenden Messwert, der zu einem Zeitpunkt T ermittelt wurde und von dem Datenkonzentrator (12) empfangen wird, der Messwert, der zum vorherigen Zeitpunkt T-1 ermittelt wurde, bei der Bildung des Produkts zum Zeitpunkt T im Datenkonzentrator (12) verwendet wird.

10. System zur Aggregation von Messwerten mehrerer intelligenter Messeinrichtungen (11.1, 11.2,..,11.N) zur Steuerung eines Verteilnetzes umfassend mehrere intelligente Messeinrichtungen (11.1, 11.2,..,11.N), einen Datenkonzentrator (12) und eine Auswertestelle(13), wobei
jeder Messeinrichtung (11.1, 11.2,..,11.N) ein öffentlicher Schlüssel (P) der Auswertestelle (13) zugeordnet ist und jede Messeinrichtung (11.1, 11.2,..,11.N) ausgebildet ist um einen ermittelten Messwert mit dem öffentlichen Schlüssel (P) zu verschlüsseln, und den verschlüsselten Messwert an den Datenkonzentrator (12) zu senden,
der Datenkonzentrator (12) eingerichtet ist um die empfangenen, verschlüsselten Messwerte zu multiplizieren und das resultierende Produkt der verschlüsselten Messwerte an die Auswertestelle (13) zu senden, und
der Auswertestelle (13) ein geheimer Schlüssel (S) zugeordnet ist und die Auswertestelle (13) eingerichtet ist um das Produkt der verschlüsselten Messwerte mit einem geheimen Schlüssel (S) der Auswertestelle zu entschlüsseln und somit die Summe der Messwerte zu ermitteln.

11. System nach Anspruch 10, wobei der Datenkonzentrator das Produkt lediglich über die Messwerte einer oder mehrerer Teilmengen von Messeinrichtungen (11.1, 11.2,..,11.N), die mit einem Datenkonzentrator (12) verbunden sind, bildet.

12. System nach Anspruch 10 oder 11, wobei die Gesamtanzahl und/oder Anzahl von Messeinrichtungen (11.1, 11.2,..,11.N) einer Teilmenge mindestens acht Messeinrichtungen (11.1, 11.2,..,11.N) beträgt.

13. Computerprogramm mit Programmbefehlen zur Durchführung des Verfahrens nach Ansprüchen 1-9.

14. Datenträger, der das Computerprogramm nach Anspruch 13 speichert.

# FIG 1

# FIG 2

# FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Privacy-friendly Energy-metering via Homomorphic Encryption, in 6th Workshop on Security and Trust Management (STM 2010). **FLAVIO D. GARCIA ; BART JACOBS.** Lecture Notes in Computer Science. 2011, vol. 6710, 226-238